# EUROPEAN PATENT SPECIFICATION

(11) **EP 0 389 152 B1**
(45) Date of publication and mention of the grant of the patent: **21.07.1993**
(21) Application number: 90302522.9
(22) Date of filing: 09.03.1990
(51) Int. Cl.: A63G 21/00

(54) **An assemblable tube or trough for use as a playground slide, a crawling tube, or the like**
Rohr oder Rinne zum Aufbau einer Rutschbahn, eines Kriechtunnels oder ähnlichem auf einem Spielplatz
Tube ou auge assemblables utilisés comme toboggan, tunnel ou analogue sur une aire de jeu

(30) Priority: 22.03.1989 FI 891377
(43) Date of publication of application: 26.09.1990
(73) Proprietor: Lappset Group Oy, FI-96320 Rovaniemi (FI)
(72) Inventor: Juntura, Aarno, SF-96320 Rovaniemi (FI); Koivurova, Heikki, SF-96320 Rovaniemi (FI)
(74) Representative: Barlow, Roy James

(56) References cited:
- FR-A- 1 357 540
- US-A- 3 343 793
- US-A- 3 667 153
- US-A- 4 379 551

## Description

The present invention relates to a tube or trough which can be assembled using only two kinds of basic units. The assembled tube or trough can be used, for example, as a play-ground slide, a crawling tube, an assemblable miniature model in children's games, or as a ramp or tube for the transfer of objects by gravity.

Assemblable play-ground slides are known in the state of the art. US Patent 3,343,793 discloses a track structure for toy cars, which can be assembled from trough-like segments by connecting the segments to each other by their ends. The segments can also be connected by their sides, whereby a tube is obtained. Curves are produced by using curved segments. In addition, the ends of the segments are provided with means for connecting the segments to each other at different angles. US Patent 4,379,551 discloses a play-ground slide which is made up of straight stretches of tubing and of stretches of tubing forming a 90° angle. The parts are linked to each other by using bolts, with the help of flanges in the parts.

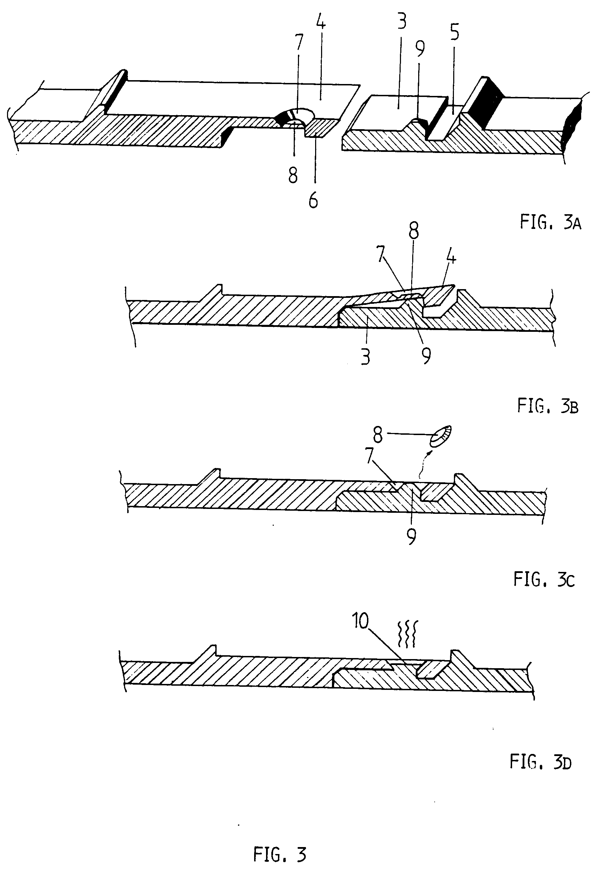

The present invention differs from that shown in Figure 3 of US Patent 3,343,793 in that the sector of the toroidal surface has been divided into parts in a different manner, thereby accomplishing the advantages provided by the invention. In each case the sector of the toroidal surface is divided into four parts of equal arc length, but in a different manner. According to the present invention, the sector of the toroidal surface is divided along the center plane of the toroid (indicated by reference numeral 36 in the US patent), whereby two identical halves are obtained.

When these halves are further divided into two, there are obtained four parts of which always two are similar in pairs, i.e. basic units of two kinds are required for forming a curved tube. In the US patent the sector of the toroidal surface is divided into four parts in such a manner that, according to Figure 3, parts 312 and 312b are mutually the same and 212c and 212a are both mutually different and different from the other two parts, in which case three kinds of basic units are thus required for forming a sector of the toroidal surface.

In these known systems the curvature of the curves is predetermined. In addition, it is necessary to manufacture several different pieces, and so the costs of manufacture and storage are high. The variability of such prior-art play-ground slides is highly limited.

The object of the present invention is to eliminate the disadvantages mentioned above. This is achieved by using an assemblable tube or trough according to the invention, which comprises several basic units linked together, the units having connecting means for connecting them to each other or to another similar basic unit, either side by side or in succession, there being two kinds of these basic units, which, when connected side by side, form one half of a sector of the desired size of a toroidal surface which has been split along its center plane, each basic unit constituting one quarter of the sector of the toroidal surface.

By using the connecting means, trough stretches can be connected side by side step-wise in different positions in relation to each other to form a curve in any desired direction.

According to the invention, two basic units can be used for making an open slide having the cross-sectional shape of a semi-circle or quarter-circle, a closed tubular slide, and a slide which has the cross section of three quarters of the arc of a circle. The basic units have been designed so that, when interconnected at their ends, they form half a cylinder which curves,in its axial direction. The angle of curvature may be, for example, the 22.5° used here, in which case four basic units in succession form a curve of 90°. However, the magnitude of the angle of curvature is not crucial, and any suitable angle desired can be used.

When two semi-cylinders are combined, a bent cylinder is formed. These bent cylinders can be linked together at different angles in relation to each other, whereby a tunnel curving in any desired direction, for example a spiral, is obtained. By using two basic units, all the necessary types of curves can be assembled: up, down, to the left, to the right, or in some other direction desired.

In a corresponding manner it is possible to assemble from the basic units an open slide which has the cross sectional shape of a semi-circle, a quarter-circle or three-quarters of a circle. By connecting basic units in succession in a suitable manner, curves to the left and to the right, and up and down, are obtained. The desired curve length and angle can be accomplished by using two basic units.

The basic units can be manufactured from either colored or colorless plastic, in which case, for example, a transparent roof can be made for a tunnel section.

If, for example, it is desired to make a completely straight part in a play-ground slide, a third basic unit must be used, which is one-quarter of the arc of the straight cylinder stretch and has connecting means similar to those in the other two basic units. On the other hand, if the angle of curvature of the curved basic unit is sufficiently small, a substantially straight tunnel or open slide can be produced even by using curved basic units.

The advantages of the present invention include the fact that considerable savings can be achieved in storage costs, since there are only two items to be stored (or three, if a straight basic unit is used). Likewise, the shapes of the basic units enable them to be stored in a space-saving manner. A slide or the like to be made using two (or three) basic units will also be inexpensive, since long production runs can be used, and by using two (or three) molds it is possible to produce basic units from which any desired play-ground slide or the like can be assembled. Furthermore, the size of the basic units is suitably small for mass production.

The basic units are interconnected by using connecting means which comprise a strip along the edges of the basic unit, with a groove in the strip. In addition the strip has teeth the ends of which extend over the edge of the strip. At the end of each tooth there is a gripping claw which engages the groove in the edge strip of the adjoining unit. The toothing interlocks with the toothing of another basic unit in such a way that.the end of each tooth rests on the strip along the edges of the other basic unit, whereby a zipper-like joint is formed.

At a point short of the gripping claw at the end of each tooth of the joining means there is formed a conical hole, which, however, does not pass all the way through the tooth; a membrane or a thin sheet has been left to cover the lower side of the hole. In the strip at a point beyond the groove there is formed a pin which fits in the hole formed in the tooth in order to lock the basic units to each other. The membrane covering the hole formed in the tooth prevents the pin in the strip from pressing into the hole by itself. In this case the basic units can first be connected to each other so that they can be dismantled, whereupon, in the case of an error in the assembling, the units can be separated from each other. After the units have been connected to each other in the desired positions, the units are secured to each other permanently by striking the end of the tooth, for example with a hammer, whereupon the pin in the strip breaks the membrane covering the hole and presses into the hole, whereby the basic units are secured to each other permanently and can no longer be detached from each other without tools. The securing can be further sealed by hot soldering the end of the pin flat in the conical hole. The basic unit with its connecting means comprises one continuous piece. To connect basic units to each other, no cost-increasing additional parts such as bolts or screws are needed, and thus the connecting of the units to each other is simple and inexpensive. The teeth can be coded suitably, in which case the assembling can be carried out on the basis of the codes, without a drawing.

If an open play ground slide is formed from the basic units, an open toothing is left on the edges of the slide. This toothing is covered by using a flexible, trough-like hand-rail, made from plastic, which is secured in place around the toothing.

The invention is described below in greater detail with reference to the figures, in which
Figure 1 depicts the basic units as seen from above and from below,
Figure 2 depicts the connecting of the basic units to each other to form a curved cylinder stretch,
Figure 3 is a cross sectional representation of the structure of the connecting means,
Figure 4 depicts a tunnel assembled from several basic units connected to each other,
Figure 5 depicts the shape of the edge handrail and its attachment to an open slide, and
Figure 6 depicts an open slide with a handrail attached to its edge.

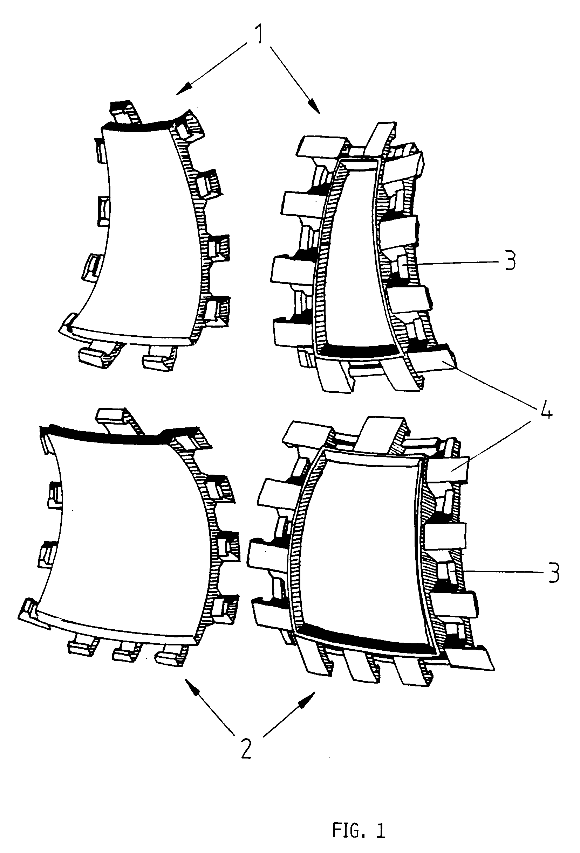

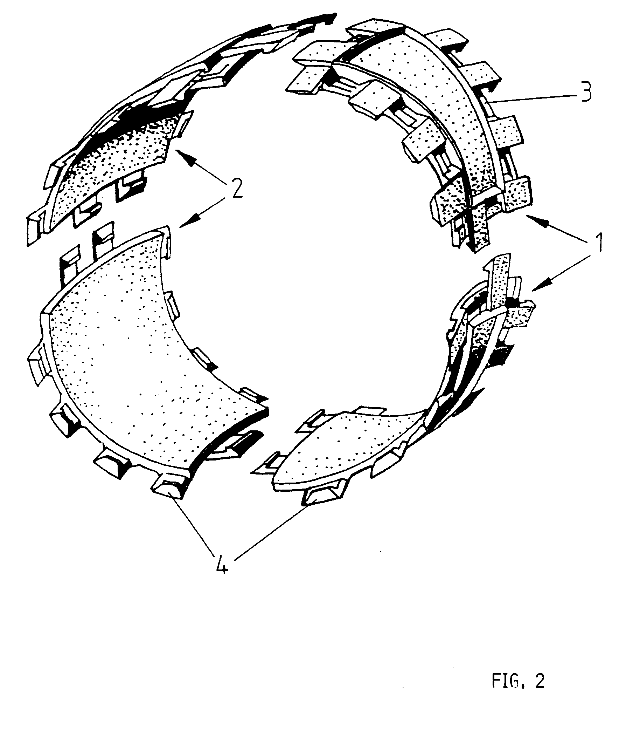

Figure 1 shows the basic units 1 and 2 as seen from below and from above, and Figure 2 shows how four (2 x two of a kind) basic units 1 and 2 are used to form a cylinder stretch having a predetermined radius of curvature. Figures 1 and 2 also show the connecting means comprising a strip 3 along the edge of the basic unit and toothing 4.

The connecting means are depicted in greater detail in Figure 3, which shows a groove 5 formed in an edge strip 3, a gripping claw 6 at the end of a tooth 4 fitting in the groove. At a point short of the gripping claw 6 the tooth 4 has a conical hole 7, which does not, however, pass all the way through the tooth; a thin membrane or sheet 8 has been left to cover its bottom. At a corresponding point in the edge strip 3, at a point beyond the groove 5, there is formed a pin 9. In Figure 3A the connecting means are separate, in Figure 3B they are in the detachably installed position, in which the thin sheet 8 covering the bottom of the hole 7 in the tooth 5 prevents the pin 9 in the edge strip 3 from pressing into the hole. In Figure 3C the connecting means have been joined permanently, for example by striking the end of the tooth with a hammer, whereby the membrane or thin sheet 8 is broken or detached and the pin 9 is pressed into the hole 7. In Figure 3D the joint is shown after hot soldering, whereby the head 10 of the pin is sealed in the conical hole.

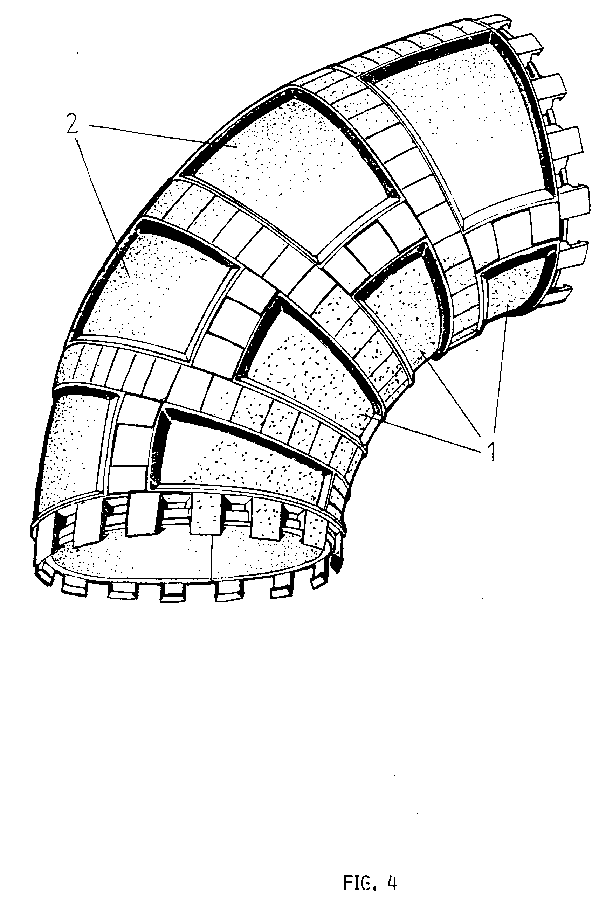

Figure 4 depicts a curved tunnel stretch assembled using two different basic units 1 and 2. The figure shows how stretches of a curved cylinder formed from four units can be connected to each other by turning them in relation to each other to produce a curve in the desired direction.

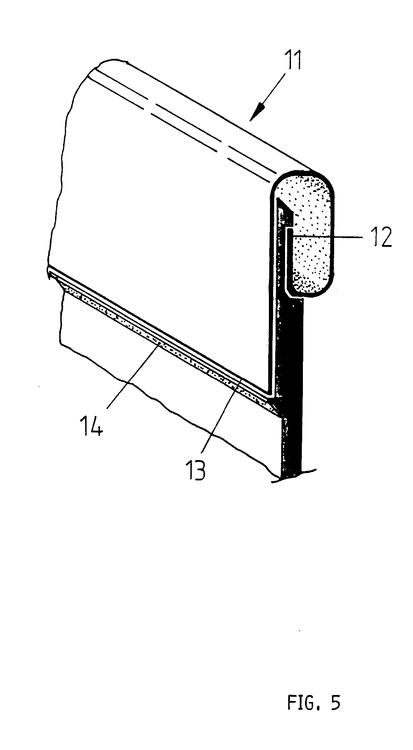

Figure 5 depicts a handrail 11 attached to the edge of a basic unit with the help of the toothing in such a manner that the folded end 12 of the rail engages behind the gripping claw of the tooth. The other end 13 of the rail rests against a ridge 14 formed in the body of the basic unit.

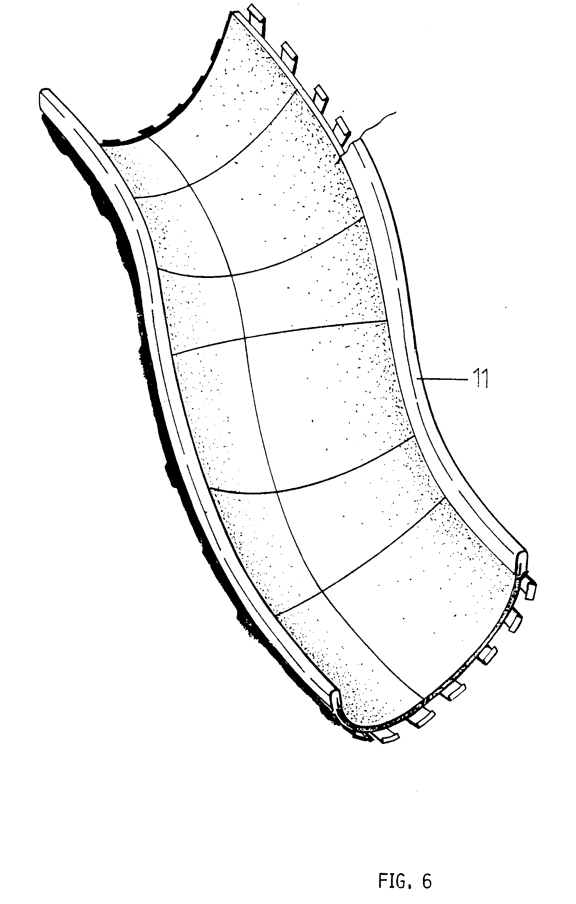

Figure 6 depicts an open slide stretch having a semi-circular cross section, with a handrail 11 attached to its edge.

## Claims

1. An assemblable tube or trough which comprises a plurality of basic units connected together, the basic units having connecting means for connecting them to each other or to another similar basic unit either side by side or in succession, each basic unit (1,2) forming one quarter of the sector of a toroidal surface, characterised in that there are two (1,2) different basic units which, when connected together side by side, form one half of a sector of the desired size of the toroidal surface split along its central plane.

2. An assemblable tube or trough according to claim 1, characterised in that the connecting means both along the sides and at the ends of each said basic unit comprise a strip (3) along the edge of the basic unit (1,2) and toothing (4) formed in the strip, the toothing interlocking with the toothing of another basic unit in such a manner that the end of each tooth rests on the strip (3) along the edge of the other basic unit.

3. An assemblable tube or trough according to claim 2, characterised in that at the end of a tooth (4) there is formed a gripping claw (6) which engages a groove (5) formed in the strip (3) of the other basic unit.

4. An assemblable tube or trough according to claim 2 or 3, characterised in that at a point short of the gripping claw (6) at the end of a tooth (4) of the connecting means there is a conical hole (7) in which a pin (9) formed in the edge strip (3) fits in order to lock the basic units to each other.

5. An assemblable tube or trough according to claim 4, characterised in that in the hole (7) in the tooth (4) there is formed a membrane or thin sheet (8) covering the hole and preventing the pushing of the pin (9) in the strip into the hole (7) by itself.

6. An assemblable tube or trough according to any of the above claims, characterised in that the basic units are manufactured from colored or transparent plastic.

7. An assemblable tube or trough according to any one of the preceding claims, characterised in that the trough has a cross sectional shape of one quarter of the arc of a toroidal surface.

8. An assemblable tube or trough according to any one of claims 1 to 6, characterised in that the trough has a cross sectional shape of three quarters of the arc of a toroidal surface.

## Patentansprüche

1. Montierbare Röhre oder Rinne, die eine Mehrzahl von aneinander angeschlossene Basiseinheiten umfaßt, die Verbindungsmittel aufweisen, um diese miteinander oder mit ähnlichen Basiseinheiten zu verbinden, und zwar nebeneinander oder hintereinander, wobei jede Basiseinheit (1,2) ein Viertel des Sektors einer toroidalen Fläche bildet,
dadurch gekennzeichnet, daß zwei (1,2)
unterschiedliche Basiseinheiten vorgesehen sind, die dann, wenn sie nebeneinander liegend miteinander verbunden sind, eine Hälfte eines Sektors gewünschter Größe der toroidalen Fläche bilden, die entlang ihrer Zentralebene geteilt ist.

2. Montierbare Röhre oder Rinne nach Anspruch 1, dadurch gekennzeichnet, daß die Verbindungsmittel sowohl entlang der Seiten als auch der Enden einer jeden Basiseinheit einen Streifen (3) entlang der Basiseinheit (1,2) sowie eine dem Streifen angeordnete Verzahnung (4) umfaßt, und daß die Verzahnung in die Verzahnung einer anderen Basiseinheit derart eingreift, daß das Ende eines jeden Zahnes am Streifen (3) entlang der Kante der anderen Basiseinheit anliegt.

3. Montierbare Röhre oder Rinne nach Anspruch 2, dadurch gekennzeichnet, daß am Ende eines Zahnes (4) eine Greifklaue (6) angeformt ist, die eine Nut (5) erfaßt, die dem Streifen (3) der anderen Basiseinheit angeformt ist.

4. Montierbare Röhre oder Rinne nach Anspruch 2 oder 3, dadurch gekennzeichnet, daß an einer Stelle nahe bei der Greifklaue (6) am Ende eines Zahnes (4) des Verbindungsmittels eine konische Bohrung (7) eingeformt ist, in welcher ein Stift (9), der dem Kantenstreifen (3) angeformt ist, hineinpaßt, um die Basiseinheiten miteinander zu verriegeln.

5. Montierbare Röhre oder Rinne nach Anspruch 4, dadurch gekennzeichnet, daß in der Bohrung (7) im Zahn (4) eine Membran oder eine dünne Folie (8) angeformt ist, die die Bohrung abdeckt und das selbsttätige Eindringen des Stiftes (9) des Streifens in die Bohrung (7) verhindert.

6. Montierbare Röhre oder Rinne nach einem der vorausgegangenen Ansprüche, dadurch gekennzeichnet, daß die Basiseinheiten aus farbigem oder transparenten Plastik hergestellt sind.

7. Montierbare Röhre oder Rinne nach einem der vorausgegangenen Ansprüche, dadurch gekennzeichnet, daß diese einen Querschnitt von einem Viertel einer toroidalen Fläche aufweist.

8. Montierbare Röhre oder Rinne nach einem der Ansprüche 1 bis 6, dadurch gekennzeichnet, daß diese einen Querschnitt von drei Vierteln des Bogens einer toroidalen Fläche aufweist.

## Revendications

1. Tube ou auge assemblable, comprenant une pluralité de modules ou unités de base reliées ensemble, les unités de base présentant des moyen de connexion afin de les relier les unes aux autres ou de les relier à des unités de base similaires, soit par leur côté, soit les unes à la suite des autres, chaque unité de base (1, 2) constituant un quart d'un secteur d'une surface toroïdale, caractérisé en ce qu'il y a deux (1, 2) unités de base différentes qui, lorsqu'elles sont reliées par leur côté, constituent une moitié d'un secteur d'une dimension désirée de la surface toroïdale coupée le long de son plan central.

2. Tube ou auge assemblable selon la revendication 1, caractérisé en ce que les moyens de liaison ou de connexion le long des côtés et le long des extrémités de chaque unité de base comprennent une bande (3) le long du bord de l'unité de base (1, 2), et des dentures (4) formées dans la bande, les dentures s'emboîtant avec les dentures d'une autre unité de base de telle sorte que l'extrémité de chaque dent repose sur la bande (3) le long du bord de l'autre unité de base.

3. Tube ou auge assemblable selon la revendication 2, caractérisé en ce qu'à l'extrémité d'une dent (4), est formé un mors de serrage (6) qui s'engage dans une rainure (5) formée dans la bande (3) de l'autre unité de base.

4. Tube ou auge assemblable selon la revendication 2 ou 3, caractérisé en ce qu'en un point proche du mors de serrage (6) à l'extrémité d'une dent (4) des moyens de connexion, est prévu un orifice conique (7) dans lequel un ergot (9) formé sur la bande de bord (3) s'engage, afin de verrouiller les unités de base les unes aux autres.

5. Tube ou auge assemblable selon la revendication 4, caractérisé en ce qu'on a formé dans l'orifice (7) de la bande (4) une membrane ou feuille mince (8) qui couvre l'orifice et qui empêche l'introduction de l'ergot (9) de la bande dans l'orifice (7) sans moyen extérieur.

6. Tube ou auge assemblable selon l'une quelconque des revendications précédentes, caractérisé en ce que les unités de base sont fabriquées en matière plastique colorée ou transparente.

7. Tube ou auge assemblable selon l'une quelconque des revendications précédentes, caractérisé en ce que l'auge a une forme de section droite qui correspond à un quart d'arc d'une surface toroïdale.

8. Tube ou auge assemblable selon l'une quelconque des revendications 1 à 6, caractérisé en ce que l'auge présente une forme de section droite qui correspond à trois quarts d'arc de surface toroïdale.
